Europäisches Patentamt

European Patent Office

Office européen des brevets

(11) Publication number:
**0 353 003**
**A2**

# EUROPEAN PATENT APPLICATION

(21) Application number: 89307504.4

(22) Date of filing: 24.07.89

(51) Int. Cl.⁵: **B 60 T 13/68**

(30) Priority: 26.07.88 GB 8817796

(43) Date of publication of application:
**31.01.90 Bulletin 90/05**

(84) Designated Contracting States:
**BE DE ES FR GB IT NL SE**

(71) Applicant: **BENDIX LIMITED**
**Douglas Road**
**Kingswood, Bristol BS15 2NL (GB)**

(72) Inventor: **Gibbons, Peter Frederick**
**deceased**
**deceased (GB)**

(74) Representative: **Turner, Alan Reginald**
**BENDIX LIMITED Douglas Road**
**Kingswood, Bristol BS15 2NL (GB)**

(54) Fluid pressure control relay valve apparatus.

㊼ A fluid pressure control relay valve has a pressure responsive piston 9 having seals (23,24) slidable in respective bores of a housing to define a control pressure chamber 12 on one side and a delivered pressure chamber on the other side, the piston 9 presenting a vent passage 13 and vent valve seat 8a engageable with a closure member 8 interconnected through a stem with a delivery valve member urged into engagement under a delivery valve seat (5a) the vent valve seat being appreciably larger than the closing valve seat enabling minimal control chamber volume to be pressure-controlled by electropneumatic valve (15,16)

EP 0 353 003 A2

# Description

## Fluid Pressure Control Relay Valve Apparatus

The present invention relates to a fluid pressure control relay valve apparatus and more especially, but not exclusively, to an electrically operable fluid pressure control relay valve apparatus for controlling fluid pressure to brake actuators of a fluid pressure operable braking system.

In the Specification of U.K. Patent No. 1,541,218 there is described an electrically operable fluid pressure relay valve arrangement which includes a control device for producing pulses of fluid pressure the mark to space ration of which is varied to establish a desired control pressure in a control chamber of the relay valve. The relay valve comprises a pressure responsive diaphragm subject on one side to the control pressure and subject on the other side to delivered pressure controlling a single valve element the inlet valve seat of which is appreciably greater in diameter than the outlet valve seat. Such an arrangement may have the shortcoming that on the one hand it requires a continuous leak of air from the control chamber in order that the mark to space control may be operable and also the arrangement of the double valve itself is such that whilst rapid response to increasing control chamber pressure may be provided for the response to reducing control chamber pressure (venting response) may be appreciably less.

It has been proposed as an alternative to provide the control chamber of a relay valve with two electropneumatic valves, one providing a controllable connection with a source of pressure and the other providing a vent connection. Accordingly the control chamber pressure can be regulated by selective operation of the control signal and the air loss may be less but still there remains the question of the speed of response of the delivered pressure to the control signals.

The object of the present invention is to provide an improved pressure operable relay valve device and apparatus wherein the aforementioned shortcomings are overcome or reduced.

In accordance with the invention there is provided an electropneumatic fluid pressure control relay valve apparatus comprising a housing having a fluid pressure input port, a fluid pressure delivery port, a vent port and a pressure control chamber a double valve operable by a pressure responsive member moveable in the housing said member being subject in one direction to pressure in the control chamber in a sense to operate said double valve to connect the input port to the delivery port and responsible in the other direction to pressure at the delivery port in a sense to operate said double valve to connect the delivery port to the vent port said apparatus including a selectively operable electropneumatic valve means in a path between the control chamber and a source and a second selectively operable electropneumatic valve means in a path between the control chamber and interconnected atmosphere characterised in that for predetermined unseating movement of the double valve means in said respective senses the venting way out from the control chamber via the valve means is appreciably greater than the input way through to said control chamber.

In order that the present invention may be more clearly understood and readily carried into effect the same will be described by way of example with reference to the accompanying drawings of which:

Fig 1 illustrates a preferred embodiment of a fluid pressure control relay valve apparatus.

Fig 2 illustrates in part block form a fluid pressure control system employing the relay valve of Fig.1.

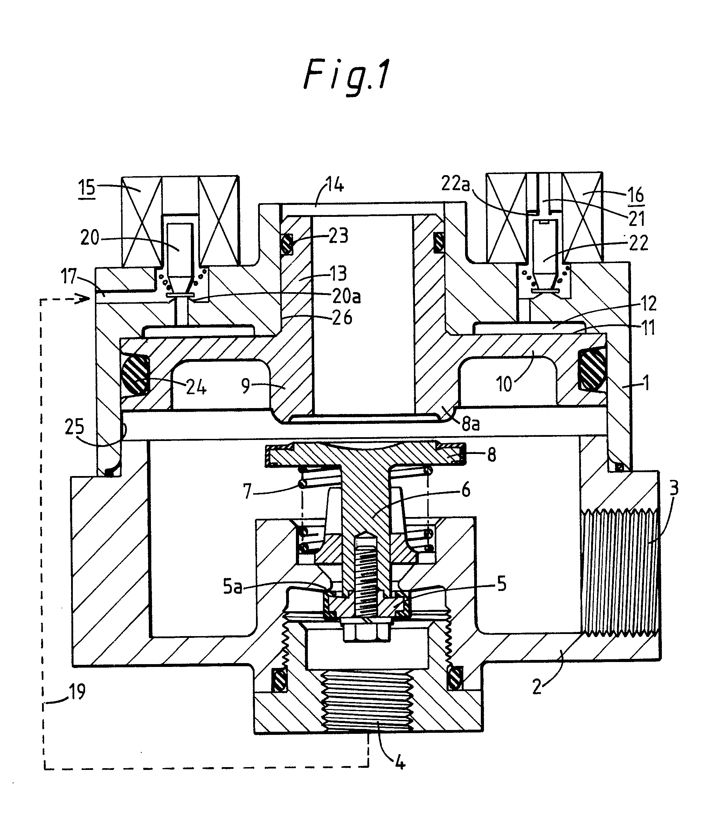

Referring to Fig 1, the fluid pressure control relay valve apparatus comprises a housing having upper and lower body parts 1 and 2 sealingly clamped together by screws (not shown). The lower port 2 is provided with a fluid pressure delivery port 3 and a fluid pressure input port 4 separated from the delivery port by a delivery valve element 5 carried on a lower end of a valve stem 6 the upper end of which carries a larger diameter valve element 8. Element 5 has a seat 5a and the two mechanically linked valve elements form a double valve which is urged into the position shown by means of a light spring denoted by reference 7. The vent valve element 8 is engageable by a vent valve seat 8a formed integrally with a pressure responsive member in the form of a piston 9. The piston 9 has respective smaller and larger diameter seals slideable in respective bores 25 and 26 to define a lower pressure responsive area 10 subject to pressure at the delivery port and an upper pressure responsible area 11 connecting with a control pressure chamber 12. A central passage 13 of the piston 9 communicates with a vent port 14 of the device. Moreover the effective diameter of seat 8a is substantially the same as bore 26.

Mounted on the body part 1 are a first normally closed electro-magnetically operable solenoid valve 15 and a second normally open electro-magnetically operable solenoid valve 16, supply of fluid pressure to input passage 17 of solenoid 15 is derived from the fluid pressure input port 4, is indicated by the dotted line connection 19.

The valve 15 comprises a movable valve member 20 which moves away from a valve seat 20a to connect fluid pressure to the control chamber 12 when the valve is energised whereas the valve 16 comprises a valve member 22 which when energised engages seat 22a to close off a vent passage 21 from the control chamber 12.

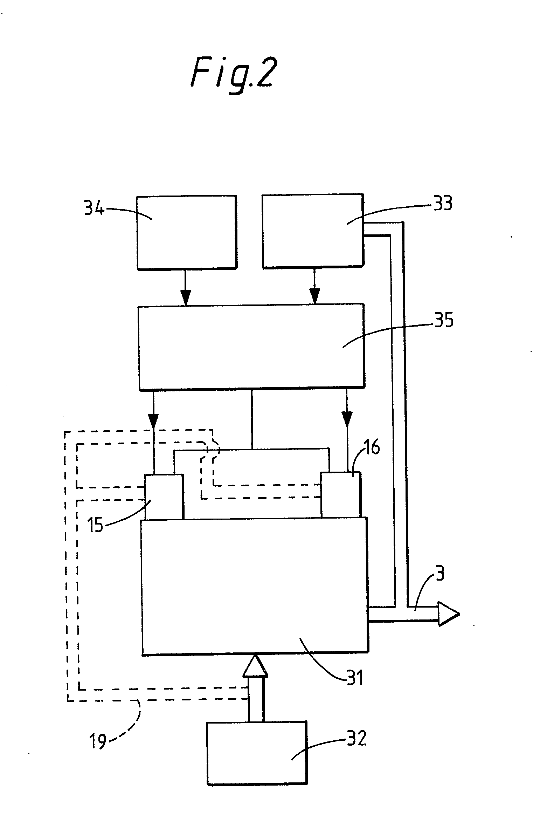

For the purposes of understanding the operation of the relay valve device, reference may now be made to Fig 2 wherein the relay valve device of Fig. 1 is denoted by the block 31 with the electro-magnetic valves 15 and 16 being denoted by the same references as in Fig. 1. The fluid pressure input port is supplied with fluid pressure from a fluid pressure source, preferably of compressed air denoted by reference 32, delivered pressure appearing at the delivery port 3 from which a communication is made to a pressure transducer 33 for converting the pressure signal at 3 into an electrical signal which is applied to one input of a signal comparator and control unit 35 a command signal to which is supplied by a command signal generator 34. Appropriate combinations of electrical signals are produced by the comparator and control unit 25 for selectively energising the operable electro-magnetically operable valves 15 and 16.

When the command signal generator 34 produces a digital output indicative to the unit 35 of a delivered pressure required from delivery port 3 of the relay valve for application to brake actuators, the valves 15 and 16 are operated with a quick response to conditions which are opposite to those shown in Fig.1. Compressed air is thus immediately applied via the connection 19 to the control chamber 12 to urge member 19 downwards so that the seat 8a engages the valve element 8 to close off the delivery port from atmosphere. There is no appreciable change of effective area of the control piston upon contact with 8 but the force of spring 7 and the area of the inlet valve seat 5a afford some stability in that condition to which is added the effect of the area under valve element 8. There is therefore some hysteresis in the assembly. Further downward movement is communicated mechanically via stem 6 to the delivery valve element 5 whereby when the stability is overcome, fluid pressure is communicated from port 4 to the delivery port 3.

Simultaneously, pressure at the delivery port 3 is applied to the area 10 of the piston 9 and the area presented by valve element 8 counteract the control chamber pressure acting on area 11. Upon attainment of a balance of pressures and forces the relay valve device laps off with elements 5 and 8 engaging their respective valve seats 5a and 8a. Under this condition an electrical signal derived from pressure transducer 33 will have corresponded to the signal from the command signal generator 34 whereupon the valve 15 will have been de-energised by the unit 35 to disconnect the pressure source from the control chamber. Upon a reduction of output pressure at the port 3 the valve element 15 retained control pressure in 12 causes further downward movement of the piston to cause replenishment of delivered pressure. Alternatively, if the command signal generator produces a signal corresponding to a reduced delivered pressure, the electro-magnetically operable valve 16 is immediately de-energised to effect partial venting of the control chamber pressure down to a value which gives rise to a reduced delivered pressure, attainment of which is sensed by the transducer 33, whereupon 35 causes re-energisation and closure of 16.

Whilst in the valve apparatus described above two separate electropneumatic valves 15 and 16 are provided one of which is energised to connect a supply pressure source to a control chamber and the other of which is energised to cause venting, these modes may be varied. For example, in certain applications it may be preferred that the first such valve is normally open whilst the venting valve is still normally closed when de-energised. Again, whilst these two valves are illustrated as separate valves and thereby may offer the possibility of a 'hold' function when they are both closed, where such 'hold' function is not needed, they may if closed, for certain applications be combined with a suitable solenoid operable double valve arrangement.

By virtue of a valve device as shown in Fig.1 and apparatus as described with reference to Fig 1 and Fig 2, a fast response to commands for delivered pressure is obtainable.

On the one hand by virtue of the valve element 8 and its respective seat 8a being of substantially greater diameter than the respective diameters of element 5 and its seat, rapid pressure reductions can also be effected with minimal movement of the piston 9. This provides a particular benefit in that the volume of control chamber can be maintained very small along with the capacity of the electromagnetic valves 15 and 16. The relay valve device is thereby eminently suitable for controlling elemental pressure variations as required in electronic braking control systems which may also provide means for preventing wheel locking by sensing unacceptable increase of wheel deceleration.

By virtue moreover of the use of separately energisable electro-magnetically operable valves such as 15 and 16 respectively of the normally closed and normally open type leakage across the element of valve 15 may not result in slow spurious brake application, since the chamber 12 is normally continuously vented. By using such valves with optimised orifice sizes fine pressure control is readily achieved and air consumption is minimal.

## Claims

1) An electropneumatic pressure control relay valve apparatus comprising a housing having therein a fluid pressure input port (4) a fluid pressure delivery port (3) a vent port (4) a vent port (13) and a pressure control chamber (12) double valve means (5,6,8) operable by a pressure responsive member moveable in the housing said member being responsive to pressure in the control chamber (12) in one sense to operate said double valve means to connect the input port (4) to the delivery port and responsive in the other sense to the pressure at the delivery port 3 to connect the delivery port (3) to the vent port (13) the apparatus including a selectively operable electropneumatic valve means (15) in a fluid path, between the control chamber (12) and a source and selectively operable electropneumatic valve means (16) in a fluid path between the control chamber (12) and a vent characterised in that for a predetermined unseating movement of the double valve means (5,6,8) in said respective senses the venting way out from the control chamber (12) via the valve is appreciably greater than the way in through to said control chamber (12).

2) An electropneumatic pressure control relay valve apparatus as claimed in Claim 1, characterised in that said source embraces the said input port (4).

3) An electropneumatic pressure control relay valve apparatus as claimed in Claim 1 or 2 characterised in that said double valve means comprises an assembly of a vent valve element (8) and a delivery valve element (5) interconnected via an adjoining stem (6) urged by resilient means (7) towards engagement of the delivery element (5) and being closingly engageable with a vent valve seat (8a) carried by the pressure responsive member (10).

4) An electropneumatic pressure control relay valve apparatus as claimed in claim 3, characterised in that the vent path between the delivery port (3) and atmosphere is via a passage (13) passing through said pressure responsive member

5) An electropneumatic pressure control relay valve operates as claimed in claim 1,2,3 or 4 characterised in that said electropneumatic valve means comprise separate independently openable valve devices.

6) An electropneumatic pressure control relay valve apparatus as claimed in claim 1,2,3, or 4 characteristics in that said electropneumatic valve means comprises a double interdependently operable valve arrangement.

# Fig.1

# Fig.2